# EUROPEAN PATENT APPLICATION

(11) **EP 1 956 544 A2**
(43) Date of publication of application: **13.08.2008**
(21) Application number: 08151116.4
(22) Date of filing: 06.02.2008
(51) Int. Cl.: G06Q 20/00

(54) **Optical character reading machine having bill payment capability**

(30) Priority: 06.02.2007 US 702843
(71) Applicant: Xerox Corporation, Rochester, New York 14644 (US)
(72) Inventor: Wilkie, Robert B., Rochester, NY 14624 (US)
(74) Representative: Grünecker, Kinkeldey, Stockmair & Schwanhäusser Anwaltssozietät

(57) **Abstract**

An optical character reading machine includes at least one processor and a bill payment system. The bill payment system includes a bill scanning and bill information parsing module for scanning a bill to obtain bill paying information; parsing the bill paying information; and verifying the bill paying information, and a bill payment module effecting a payment to a payee identified from the bill paying information. Verification is for completeness and accuracy. If the bill paying information is not complete or accurate, the user is prompted to make corrections. Either a pre-established payment method or an alternative payment method may be used to effect payment of the bill. The bill may include first and second data encoded marking codes encoding fixed and variable billing information for the bill scanning and parsing module to read and decode for effecting payment of the bill

## Description

### BACKGROUND

### Technical Field

The present disclosure relates to payment processing systems and methods, and more particularly, to methods and machines for effecting the payment of bills.

### Description of Related Art

Periodic or one-time billing for goods or services is to a large extent performed by mailing, facsimile transmitting or otherwise providing a hard copy of a bill from a billing party or payee, e.g., a service provider such as a utility or telecommunications provider, a distributor or manufacturer of goods purchased, etc. When a new bill arrives in the mail, the billed person or payer may not have a pre-established account for automatic payment of the bill. That is, the account in question may not be listed in the payer's e-banking list.

To pay the bill, the payer must either add the bill paying information identified on the bill statement to the e-banking list or manually pay the bill by writing and sending a personal check, purchasing and sending a money order, paying at a bill paying location, etc. or authorize deduction from a financial account via a telephone payment, or by PayPal®. Sending the payment may occasionally result in delays or lost payments. Paying the bill by the methods other than e-banking is also comparatively slow.

It is known that the hard copy bills can be made into electronic image files of scanned documents in a TIFF, multi-page TIFF, JPG, PDF or other formats. The documents can be scanned and saved in these formats using "multi-function" machines which have become familiar in offices.

Whereas, previously, functions such as copying, scanning, printing, and facsimile transmission have been performed by single dedicated optical character reading (OCR) machines such as copiers, scanners, printers, and facsimiles respectively, a multi-function machine, also an optical character reading machine, is typically capable of providing all such functions and more in a single machine. Typically such a multi-function machine includes a single print engine, which can serve to output copies, prints, or received facsimiles; as well as a single input scanner which can serve to record data from original images for use in copying, facsimile transmission, and retention of input image data to a predetermined location in a computer memory ("scan-to-file").

Such multi-function machines are typically connected to data networks, such as the Internet, for exchange of both image data and associated operational instructions. Their connection to data networks also enables a user to scan a document to create an electronic image file and email the electronic image file using a scan-to-email function typically found on such multi-function machines. The scan-to-email function can also be used to email a previously stored electronic image file using the scan-to-file function. The multi-function machine can be a xerographic machine which uses xerographic printing techniques to print a reproduction of a document placed on a platen glass. Exemplary xerographic multi-function machines are the Xerox WorkCentre^{™} PE120 and Pro65 models available from the XEROX Corporation.

The scan-to-email function generally enables the user to use a personal computer connected to the multi-function machine via a data network or a computer incorporated with the multi-function machine to execute an email editor, access the electronic image file from a memory of the multi-function machine and import it to the email editor for transmitting it as an attachment to an email message composed using the email editor. The message and the attachment are transmitted to one or more recipients whose email address is provided in the header of the graphical user interface of the email editor and all individuals associated with the one or more aliases also provided in the header after selecting a "Send" icon. Once the email with the accompanying electronic image file attachments are received by the recipients, the email message and the attachments can be viewed.

However, electronic scanning of the hard copy bill using the multifunction machine does not effect payment of the bill.

### SUMMARY

The present disclosure relates to a machine having bill payment capability.

More particularly, the present disclosure relates to a machine that includes at least one processor and a bill payment system. The bill payment system includes a bill scanning and bill information parsing module having a set of programmable instructions configured for execution by the at least one processor for: scanning a bill to obtain bill paying information; parsing the bill paying information; and verifying the bill paying information. The bill paying system also includes a bill payment module having a set of programmable instructions configured for execution by the at least one processor for effecting a payment to a payee identified from the bill paying information.

In one embodiment, the bill further includes a first data encoded marking code, such as a bar code, DataGlyph^{™}, etc., that includes in an encoded format bill paying information that is fixed in nature, and the bill scanning and parsing module has a set of programmable instructions configured for execution by the at least one processor for reading and decoding the first data encoded marking code to read the billing information that is fixed in nature. In one embodiment, the bill further includes a second data encoded marking code, such as a bar code, DataGlyph^{™}, etc., that includes in an encoded format bill paying information that is variable in nature, and the bill scanning and parsing module has a set of programmable instructions configured for execution by the at least one processor for reading and decoding the second data encoded marking code to read the billing information that is variable in nature.

The machine may further include a transmission module having a set of programmable instructions configured for execution by the at least one processor for transmitting a payment authorization signal for effecting payment to the payee.

The verifying of the bill paying information may include at least one of verifying whether the bill paying information is complete and whether the bill paying information is accurate. Execution by the at least one processor of the set of programmable instructions corresponding to the bill scanning and bill information parsing module may include, wherein if the bill paying information is not complete, prompting a user to provide missing information. Execution by the at least one processor of the set of programmable instructions corresponding to the bill scanning and bill information parsing module may include, wherein if the bill paying information is complete, prompting a user to confirm the accuracy of the bill paying information. Additionally, execution by the at least one processor of the set of programmable instructions corresponding to the bill payment module may include, wherein if the bill paying information is complete and accurate, identifying whether a pre-established payment method is in effect with respect to the payee identified from the bill paying information; prompting a user to confirm whether, if a payment method has been pre-established, the pre-established payment method is to be used for issuing the payment; and prompting a user, wherein one of a payment method has not been pre-established and a user does not confirm using the pre-established payment method for issuing the payment, for effecting payment via an alternative payment method.

Execution by the at least one processor of the set of programmable instructions corresponding to the bill scanning and bill information parsing module and of the set of programmable instructions corresponding to the bill payment module may include adding the payee to a list of authorized payees and/or the payment method to a list of authorized payment methods. The bill paying information and payment data may be added to a data storage memory. The payment data may include a pre-established payment method.

In addition, the present disclosure relates to a method of scanning a bill and processing payment of the bill. The method includes the steps of: scanning a bill to obtain bill paying information; parsing the bill paying information; verifying the bill paying information; and effecting a payment to a payee with respect to the bill paying information. The method may be implemented wherein the bill further includes a first data encoded marking code, such as a bar code, DataGlyph^{™}, etc., that includes, in an encoded format, bill paying information that is fixed in nature, with the method further including the step of reading and decoding the first data encoded marking code to read the billing information that is fixed in nature. The method may also be implemented wherein the bill further includes a second data encoded marking code, such as a bar code, DataGlyph^{™}, etc., that includes in an encoded format bill paying information that is variable in nature, with the method further comprising the step of reading and decoding the second data encoded marking code to read the billing information that is variable in nature.

Additionally, the verifying of the bill paying information may include at least one of verifying whether the bill paying information is complete and whether the bill paying information is accurate. If the bill paying information is not complete, the method may include prompting a user to provide missing information. If the bill paying information is complete, the method may include prompting a user to confirm the accuracy of the bill paying information.

The method may further include the steps of, wherein if the bill paying information is complete and accurate, identifying whether a pre-established payment method is in effect with respect to a payee identified from the bill paying information; prompting a user to confirm whether, if a payment method has been pre-established, the pre-established payment method is to be used for effecting the payment; and prompting a user, wherein one of a payment method has not been pre-established and a user does not confirm using the pre-established payment method for effecting the payment, for payment via an alternative payment method. The method may further include the step of adding the payee to a list of authorized payees. The method may include adding the payee to a list of authorized payees and/or the payment method to a list of authorized payment methods. The method may be implemented wherein the bill paying information and payment data may be added to a data storage memory. The payment data may include a pre-established payment method. Furthermore, the method may further include the step of transmitting a payment authorization signal for effecting payment to the payee.

The present disclosure relates also to a computer-readable medium storing a set of programmable instructions configured for being executed by at least one processor for performing a method of scanning a bill and processing payment of the bill, with the method including the steps of scanning a bill; parsing bill paying information from the bill; verifying the bill paying information; and effecting a payment to a payee with respect to the bill paying information. In addition, the computer-readable medium storing a set of programmable instructions may also be configured for being executed by at least one processor for performing the other method steps described above.

In one embodiment of the machine according to claim 1, the verifying of the bill paying information includes at least one of verifying whether the bill paying information is complete and whether the bill paying information is accurate.

In a further embodiment execution by the at least one processor of the set of programmable instructions corresponding to the bill scanning and bill information parsing module includes, wherein if the bill paying information is not complete, prompting a user to provide missing information.

In a further embodiment execution by the at least one processor of the set of programmable instructions corresponding to the bill scanning and bill information parsing module includes, wherein if the bill paying information is complete, prompting a user to confirm the accuracy of the bill paying information.

In a further embodiment execution by the at least one processor of the set of programmable instructions corresponding to the bill payment module includes, wherein if the bill paying information is complete and accurate,
identifying whether a pre-established payment method is in effect with respect to the payee identified from the bill paying information;
prompting a user to confirm whether, if a payment method has been pre-established, the pre-established payment method is to be used for issuing the payment; and
prompting a user, wherein one of a payment method has not been pre-established and a user does not confirm using the pre-established payment method for issuing the payment, for effecting payment via an alternative payment method.

In a further embodiment execution by the at least one processor of the set of programmable instructions corresponding to the bill scanning and bill information parsing module and of the set of programmable instructions corresponding to the bill payment module includes adding the payee to a list of authorized payees.

In a further embodiment by the at least one processor of the set of programmable instructions corresponding to the bill scanning and bill information parsing module and of the set of programmable instructions corresponding to the bill payment module includes adding at least one of the payment method and the payee to a list of authorized payment methods and payees, respectively.

In one embodiment of the method according to claim 9, the method further comprises the step of, wherein if the bill paying information is complete, prompting a user to confirm the accuracy of the bill paying information.

In a further embodiment the method further comprises the steps of,
wherein if the bill paying information is complete and accurate, identifying whether a pre-established payment method is in effect with respect to a payee identified from the bill paying information;
prompting a user to confirm whether, if a payment method has been pre-established, the pre-established payment method is to be used for effecting the payment; and
prompting a user, wherein one of a payment method has not been pre-established and a user does not confirm using the pre-established payment method for effecting the payment, for payment via an alternative payment method.

In a further embodiment the method further comprises the step of adding the payee to a list of authorized payees.

In a further embodiment the method further comprises the step of adding at least one of the payment method and the payee to a list of authorized payment methods and payees, respectively.

### BRIEF DESCRIPTION OF THE DRAWINGS

Various embodiments of the present disclosure will be described herein below with reference to the figures wherein:
FIG. 1 is an example of a hard copy bill mailed to a customer by a service provider and which contains billing information;
FIG. 2 is a block diagram of a system for scanning a hard copy bill and paying the bill via a payment module according to the present disclosure;
FIG. 3A is a portion of a block diagram of a system for scanning a hard copy bill and paying the bill according to the present disclosure; and
FIG. 3B is a continuation of the block diagram of the system of FIG. 3A for scanning a hard copy bill and paying the bill.

### DETAILED DESCRIPTION

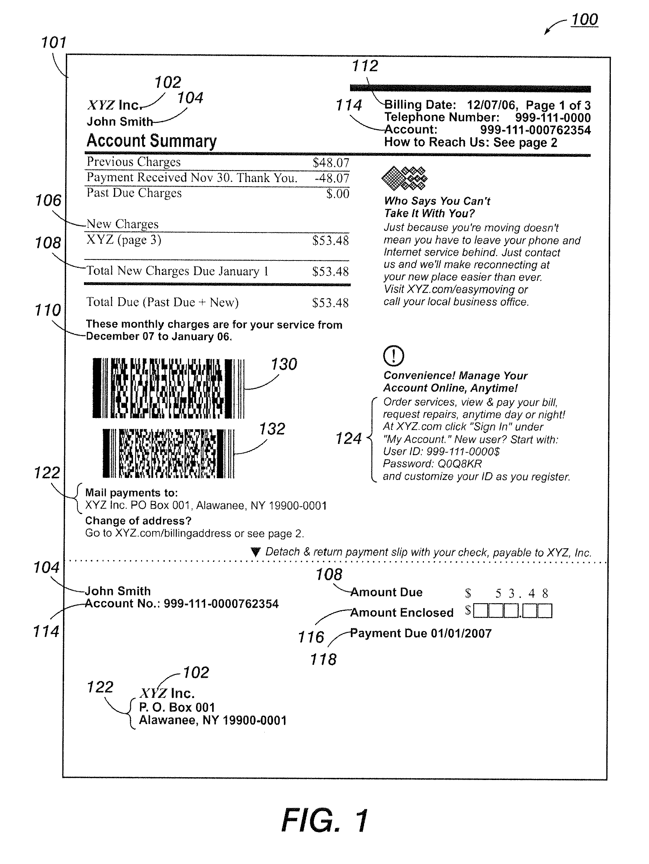

To address the issues related to prior art methods of paying bills described above, with reference to FIG. 1, there is illustrated an example of a hard copy bill 100 mailed to a customer, i.e., the bill payer, by a service provider, i.e., the payee, and which contains bill paying information or account information 101. More particularly, the bill 100 contains bill paying information 101 such as the name of the payee 102, e.g., "XYZ Inc."; the name of the customer or payer 104, e.g., "John Smith"; the reason for the charges, e.g., the services provided 106 such as "New Charges"; and the total amount due 108, e.g., "$53.48." Additional account information includes the period 110 during which the services were or are to be provided, e.g., "December 07 to January 06"; the billing date 112, e.g. "12/07/06"; the account number 114, e.g., "999-111 0000 762354". The account information or bill paying information 101 also includes a space for the payer to indicate the amount enclosed 116; the payment due date 118, e.g., "01/01/07"; the billing address 122, e.g., "XYZ Inc., P.O. Box 001, Alawanee, NY 19900-0001" for mailing a check or money order. In some cases, the bill 100 may include a method of payment 124, e.g., a website "XYZ.com" by which payment can be made via an electronic withdrawal from a financial account of the payer 104.

In one embodiment, the hard copy bill 100 may include a first data encoded marking code 130, such as a PDF-417 portable data file (PDF) bar code, DataGlyph^{™}, etc., that includes in an encoded format the portion of the bill paying information 101 that is fixed in nature, e.g., the name of the payee 102; the name of the customer or payer 104; the account number 114; the billing address 122, etc. In one embodiment, the hard copy bill 100 may also include a second data encoded marking code 132, that may also be a PDF-417 portable data file (PDF) bar code, DataGlyph^{™}, etc., that includes in an encoded format the portion of the bill paying information 101 that is variable in nature, e.g., the reason for the charges, e.g.; the services provided 106; the total amount due 108; the period 110 during which the services were or are to be provided; the billing date 112; the payment due date 118, etc.

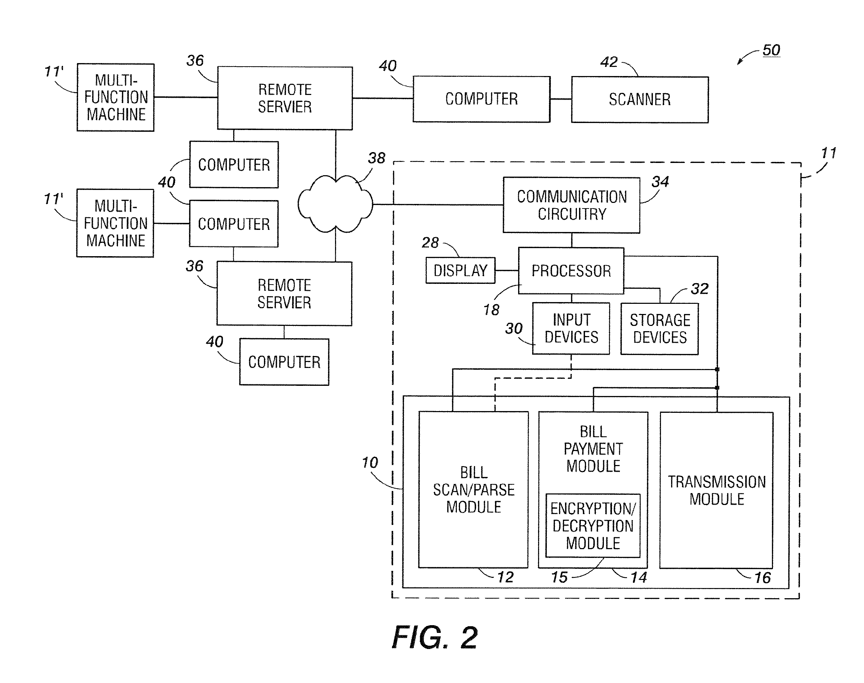

With reference to FIG. 2, there is shown a block diagram of an automated bill paying system 50 that is implemented via an optical character reading machine such as a copier, scanner, printer, facsimile machine or multifunction machine in accordance with the present disclosure. The system 50 includes an optical character reading machine 11 having an automated bill paying system designated generally by reference numeral 10. The automated bill paying system 10 includes a bill payment system software program 10' which includes several modules 12, 14, 15, 16. To read and decode the first and second data encoded marking codes 130 and 132, the bill paying system software program 10' may include suitable software to read and decode the PDF-417 multi-dimensional type bar codes or other data encoded marking codes. As defined herein, an optical character reading machine includes a machine capable of scanning and decoding data encoded marking codes, such as a bar code, DataGlyph^{™}, etc., the data encoded marking codes being considered optical characters, and also includes a printer as a machine that processes optical characters.

More particularly, referring to FIGS. 1-2, the present disclosure relates to an optical character reading machine 11 that includes at least one processor 18 and a bill payment system 10', with the bill payment system 10' including: a bill scanning and bill information parsing module 12 having a set of programmable instructions configured for execution by the at least one processor 18 for: scanning a bill 100 to obtain bill paying information 101; parsing the bill paying information 101; and verifying the bill paying information 101. The optical character reading machine 11 includes a bill payment module 14 having a set of programmable instructions configured for execution by the at least one processor 18 for effecting payment to a payee 102 identified from the bill paying information 101. The payee 102 may simply be a financial account represented by an account number or the payee may be a third party being paid on behalf of the payee 102.

Each module of the bill payment system software program 10' includes a set of programmable instructions configured for execution by at least one processor 18 of the optical character reading machine 11 for performing the functions in accordance with the present disclosure. The set of programmable instructions can be application software stored within a memory, such as RAM and ROM, of the at least one processor 18 and/or a computer-readable medium, such as a hard drive, CD-ROM, DVD, 3.5 inch diskette, etc., readable by one or more reading devices of the optical character reading machine 11.

The bill payment system 10 includes a bill scanning and bill information parsing module 12 having a set of programmable instructions configured for execution by the at least one processor 18 for: scanning the bill 100 to obtain the bill paying information 101; parsing the bill paying information 101; and verifying the bill paying information 101. The bill payment system 10 also includes a bill payment module 14 having a set of programmable instructions configured for execution by the at least one processor 18 for effecting payment to a payee 102 identified from the bill paying information 101.

In one embodiment, the bill scanning and bill information parsing module 12 may have a set of programmable instructions configured for execution by the at least one processor 18 for scanning and decoding the first data encoded marking code 130 that includes billing information 101 that is fixed in nature, as described above. In one embodiment, the bill scanning and bill information parsing module 12 may have a set of programmable instructions configured for execution by the at least one processor 18 for scanning and decoding the second data encoded marking code 132 that includes billing information 101 that is variable in nature. The embodiments are not limited in this context.

The bill payment module 14 may include an encryption/decryption sub-module 15 having a set of programmable instructions configured for execution by the at least one processor 18 to encrypt the bill paying information 101 that may contain sensitive data such as financial account and/or personal identification number of the bill payer 104 that may be transmitted to the payee 102 by means of a secure website accessed via the network 38 to the remote server 36. The remote server 36 may be a server of a financial institution maintaining a financial account of the payee 102 into which the payee would otherwise deposit a payment received from the payer 104.

One module of the automated bill paying software program 10' is a transmission module 16 having a set of programmable instructions configured for execution by the at least one processor 18 to transmit a payment authorization signal for effecting payment to the payee 102.

The modules 12, 14, 15, 16 can also include additional programmable instructions capable of being executed by the at least one processor 18 for performing other functions which may be known in the art for conventional scanners or bill paying systems.

The at least one processor 18 is in operable communication with a display device 28 for displaying various screens, including bill paying information screens in accordance with the present disclosure and as shown; one or more input devices 30, such as a keypad, control panel, and document scanner; one or more external storage devices 32, such as a database; and communication circuitry 34 for enabling the optical character reading machine 1 to receive and transmit messages from and to one or more remote servers 36 via a communications network 38, such as the Internet or a local area network. The one or more servers 36 are linked to a plurality of computers or terminals 40 that may be known in the art. The remote server 36 may be in operable communication with an optical character reading machine 11' that may belong to the payee 102 such that payment data recording payment of the bill 100 may be received from the payer 104 and stored in a data memory of the remote server 36.

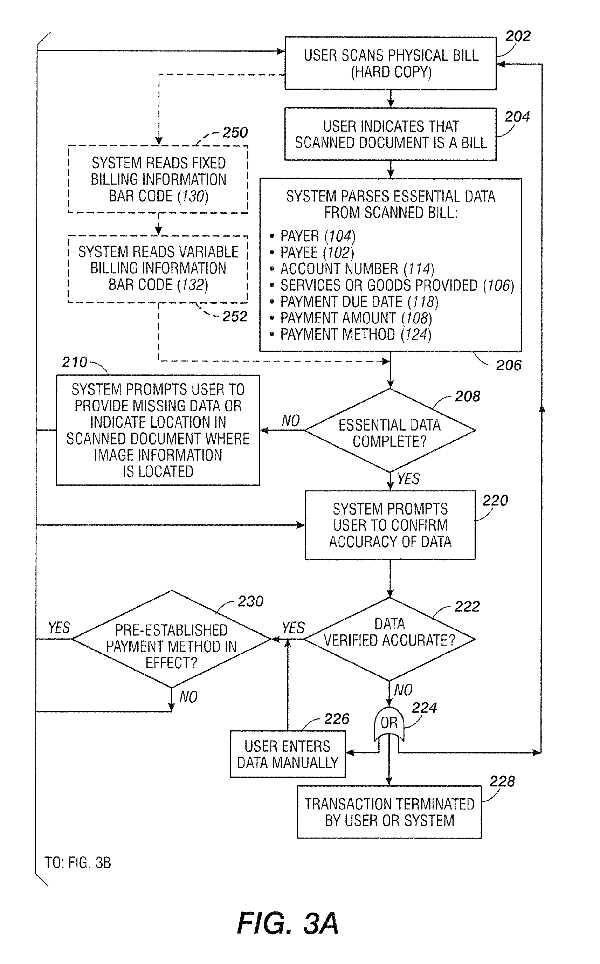

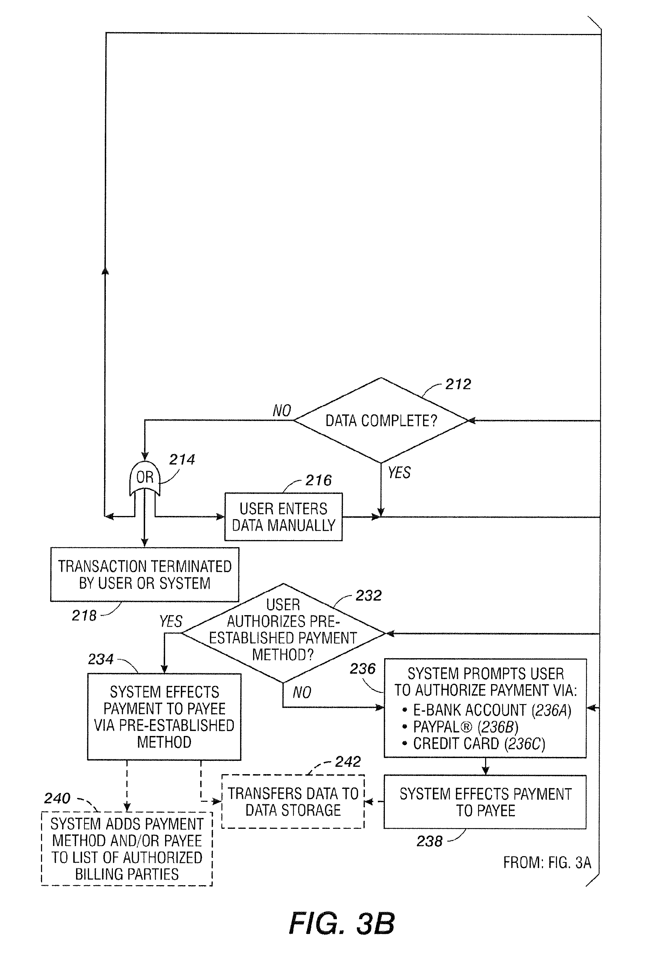

In operation, with reference again to FIGS. 1, 2 and now also to FIGS. 3A and 3B, method 200 of scanning and paying the bill 100 includes the step 202 of a user, such as the payer 104, scanning the hard copy bill 100 to obtain bill paying information 101. The user may also include a representative of the payer 104 acting on the payer's behalf The scanning may be performed either at and by the input devices 30 that are in operable communication with the at least one processor 18 or at and by at least one separate scanner 42 in operable communication with the at least one processor 18 via one of the computers 40 that are in operable communication with the at least one scanner 42 via the remote server 36, the internet or local area network 38, and the communication circuitry 34. In step 204, the user indicates, by appropriate input to the at least one processor 18 via the input devices 30, that the scanned document is a bill, such as bill 100, whereupon the at least one processor 18 communicates the scanned bill paying information 101 to the bill scanning and parsing module 12.

In one embodiment, following the step 202 of a user, such as the payer 104, scanning the hard copy bill 100 to obtain bill paying information 101, in step 250, the step of reading and decoding from the first data encoded marking code 130 billing information 101 that is fixed in nature is performed. In one embodiment, following step 250, in step 252, the step of reading and decoding from the second data encoded marking code 132 billing information 101 that is variable in nature is performed. Following at least one of steps 250 and 252, as indicated in decision step 208, either the bill scanning and parsing module 12 or the bill payment module 14 continues the process by verifying whether the bill paying information 101 is complete.

Alternatively, in step 206, the bill scanning and parsing module 12 parses at least essential bill paying information from bill paying information 100, e.g., the payer 104, the payee 102, the account number 114, the payment due date 118, and the payment amount 108. The bill paying information 100 parsed by the bill scanning and parsing module 12 may further include the goods and/or services provided 106 and the payment method 124. The bill scanning and parsing module 12 or the bill payment module 14 verifies the billing information 101, such as for at least one of completeness and accuracy.

In particular, as indicated in decision step 208, either the bill scanning and parsing module 12 or the bill payment module 14 verifies whether the bill paying information 101 is complete. If the bill paying information 101 is not complete, in step 210, either the bill scanning and parsing module 12 or the bill payment module 14 prompts the user, e.g., payer 104, to provide missing data. Providing the missing data may include the user indicating a location in the scanned document image where the information is located. Such indicating a location may be implemented via the user actuating a touch-screen feature in the display 28 or the input devices 30.

In decision step 212, if the missing data still has not been provided by locating the data on the scanned document such as the bill 100, the bill paying system 10 implements OR gate 214. OR gate 214 permits the user, in step 216, to enter the missing data manually to counteract the missing data status by transferring to the YES output of decision step 212. Alternatively, the OR gate 214 permits the user to return to step 202 wherein the user again scans the physical or hard copy of the bill 100, or in step 218, the transaction is terminated either by the user 104 or by the bill payment system 10.

Once at least the essential bill paying data or information 101 is complete, either at decision steps 208 or 212, in step 220, either the bill scanning and parsing module 12 or the bill payment module 14 prompts the user 104 to confirm the accuracy of the bill paying information 101. In decision step 222, if the bill paying information 101 is not accurate, the bill paying system 10 implements OR gate 224. In a similar manner to OR gate 214, OR gate 224 permits the user, in step 226, to enter the inaccurate data manually to counteract the inaccurate data status by transferring to the YES output of decision step 222. Alternatively, the OR gate 224 permits the user 104 to return to step 202 wherein the user again scans the physical or hard copy of the bill 100, or in step 228, the transaction is terminated either by the user 104 or by the bill payment system 10.

Once the billing information 101 has been determined to be at least one of complete and accurate, and in one embodiment, both complete and accurate, in decision step 230, the bill payment module 14 determines whether a pre-established payment method is in effect with respect to the payee identified from the bill paying information 101. If a pre-established payment method is in effect, the bill payment module 14 now prompts the user 104, in decision step 232, to authorize payment via the pre-established payment method.

If the user authorizes payment via the pre-established method, in step 234, the bill payment module 14 effects payment to the payee 102 via the pre-established method. The pre-established method may include electronic transfer of funds from a financial account of the payer 104 to the payee 102, that may be referred to as electronic bill payment or e-banking or the like. The pre-established method may also include issuing and sending a check to the payee. The embodiments are not limited in this context.

Alternatively, in step 230, if it is determined that no pre-established payment method is in effect, or in step 232, the user does not authorize payment via the pre-established payment method (e.g., the at least one processor 18 or the user 104 has determined that there are insufficient funds in the financial account associated with the pre-established payment method), in step 236, the bill payment module 14 prompts the user 104 to authorize payment via an alternative payment method.

The alternative payment method may include an electronic transfer of funds from an alternate financial account 236a; an online payment account 236b, such as a PayPal® account; or a credit card account 236c, among various means for effecting payment. Once the appropriate data and authorization are received from the user, e.g., payer 104, in step 238, the bill paying system 10 effects payment of the bill 100 to the payee 102. The embodiments are not limited in this context.

In one embodiment, as indicated in step 240, execution by the at least one processor 18 of the set of programmable instructions corresponding to the bill scanning and bill information parsing module 12 and of the set of programmable instructions corresponding to the bill paying module 14 includes adding at least one of the payment method and the payee 102 to a list of authorized payment methods and payees, respectively.

In one embodiment, as indicated in step 242, execution by the at least one processor 18 of the set of programmable instructions corresponding to the bill scanning and bill information parsing module 12 and of the set of programmable instructions corresponding to the bill paying module 14 includes adding at least one of the payment method and payment data to a data storage memory, e.g., storage device 32. The payment data includes the confirmation data establishing the date of payment, the amount of payment, the payee, the method of payment, and the like. In one embodiment, the payment data includes the pre-established payment method.

As can be appreciated from the foregoing, the present disclosure has described optical character reading machine 11 that includes at least one processor 18; and bill payment system 10, having bill payment system software program 10' that includes: bill scanning and bill information parsing module 12 having a set of programmable instructions configured for execution by the at least one processor 18 for: scanning the bill 100 to obtain bill paying information 101; parsing the bill paying information 101; and verifying the bill paying information 101; and a bill payment module 14 having a set of programmable instructions configured for execution by the at least one processor 18 for effecting a payment to a payee, e.g., payee 102, with respect to the bill paying information 101. The set of programmable instructions of the multifunction machine 11 that is configured for execution by the at least one processor 18 may perform the various other steps of the method 200 described herein.

In addition, the present disclosure has described method 200 of scanning a bill, e.g., bill 100, and processing payment of the bill 100. The method 200 includes the steps of scanning the bill 100 to obtain bill paying information 101, parsing the bill paying information 101, verifying the bill paying information 101, and effecting a payment to a payee, e.g., payee 102, with respect to the bill paying information 101. The various other steps of the method 200 may also be performed as described herein.

Furthermore, the present disclosure has described a computer-readable medium storing a set of programmable instructions configured for being executed by at least one processor 18 for performing the method 200 of scanning a bill, e.g., bill 100, and processing payment of the bill 100. The method 200 includes the steps of scanning the bill 100 to obtain bill paying information 101, parsing the bill paying information 101, verifying the bill paying information 101, and effecting a payment to a payee, e.g., payee 102, with respect to the bill paying information 101. In addition, the computer-readable medium storing a set of programmable instructions may be configured for being executed by at least one processor 18 for performing the various other steps of the method 200 described herein.

## Claims

1. A machine comprising:
at least one processor; and
a bill payment system comprising:
a bill scanning and bill information parsing module having a set of programmable instructions configured for execution by the at least one processor for:
scanning a bill to obtain bill paying information;
parsing the bill paying information; and
verifying the bill paying information;
and
a bill payment module having a set of programmable instructions configured for execution by the at least one processor for:
effecting a payment to a payee identified from the bill paying information.

2. The machine according to Claim 1,
wherein the bill further comprises a first data encoded marking code that includes in an encoded format bill paying information that is fixed in nature, and
wherein the bill scanning and parsing module has a set of programmable instructions configured for execution by the at least one processor for reading and decoding the first data encoded marking code to read the billing information that is fixed in nature.

3. The machine according to Claim 2,
wherein the bill further comprises a second data encoded marking code that includes in an encoded format bill paying information that is variable in nature, and
wherein the bill scanning and parsing module has a set of programmable instructions configured for execution by the at least one processor for reading and decoding the second data encoded marking code to read the billing information that is variable in nature.

4. The machine according to Claim 1, further comprising a transmission module having a set of programmable instructions configured for execution by the at least one processor for transmitting a payment authorization signal for effecting payment to the payee.

5. A method of scanning a bill and processing payment of the bill, the method comprising the steps of:
scanning a bill to obtain bill paying information;
parsing the bill paying information;
verifying the bill paying information; and
effecting a payment to a payee with respect to the bill paying information.

6. The method according to Claim 5,
wherein the bill further comprises a first data encoded marking code that includes in an encoded format bill paying information that is fixed in nature, the method further comprising the step of reading and decoding the first data encoded marking code to read the billing information that is fixed in nature.

7. The method according to Claim 6,
wherein the bill further comprises a second data encoded marking code that includes in an encoded format bill paying information that is variable in nature, further comprising the step of reading and decoding the second data encoded marking code to read the billing information that is variable in nature.

8. The method according to Claim 5, wherein the verifying of the bill paying information includes at least one of verifying whether the bill paying information is complete and whether the bill paying information is accurate.

9. The method according to Claim 8, further comprising the step of, wherein if the bill paying information is not complete, prompting a user to provide missing information.

10. A computer-readable medium storing a set of programmable instructions configured for being executed by at least one processor for performing the method of any of claims 5 to 9.
